Europäisches Patentamt

European Patent Office

Office européen des brevets

(19)

(11) Publication number : **0 361 596 B1**

## (12) EUROPEAN PATENT SPECIFICATION

(45) Date of publication of patent specification :
**05.08.92 Bulletin 92/32**

(51) Int. Cl.[5] : **A23J 3/30**

(21) Application number : **89202368.0**

(22) Date of filing : **20.09.89**

(54) Process for preparing improved hydrolysed protein.

(30) Priority : **26.09.88 EP 88202085**
**17.10.88 GB 8824240**

(43) Date of publication of application :
**04.04.90 Bulletin 90/14**

(45) Publication of the grant of the patent :
**05.08.92 Bulletin 92/32**

(84) Designated Contracting States :
**BE CH DE ES FR GB IT LI NL SE**

(56) References cited :
**EP-A- 0 209 921**
**EP-A- 0 226 769**
**US-A- 3 615 694**
**CHEMICAL ABSTRACTS, vol. 78, no. 5, 5th**
**February 1973, page 383, abstract no. 28213f,**
**Columbus, Ohio, US; & SU-A-350 452(UKRAI-**
**NIAN SCIENTIFIC-RESEARCH INSTITUTE OF**
**THE MEAT AND DAIRY INDUSTRY) 13-09-1972**

(73) Proprietor : **UNILEVER N.V.**
**Burgemeester s'Jacobplein 1 P.O. Box 760**
**NL-3000 DK Rotterdam (NL)**
(84) **BE CH DE ES FR IT LI NL SE**
Proprietor : **UNILEVER PLC**
**Unilever House Blackfriars P.O. Box 68**
**London EC4P 4BQ (GB)**
(84) **GB**

(72) Inventor : **Payne, Laurence Sidney**
**124 Cudworth Road South Willesborough**
**Ashford Kent TN24 0BB (GB)**

(74) Representative : **Dries, Antonius Johannes**
**Maria et al**
**Unilever N.V. Patent Division P.O. Box 137**
**NL-3130 AC Vlaardingen (NL)**

EP 0 361 596 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The invention relates to a chemical process for improving hydrolysed protein, in particular to HCl-hydrolysed protein.

The hydrolysis of proteins by treatment with hydro-chloric acid was developed by Liebig in the middle of the last century. Since then the method has been extensively employed for the commercial production of food supplements and flavours.

In commercial operations it is customary to hydrolyse the mainly vegetable proteins by boiling with strong hydrochloric acid followed by cooling and neutralization of the hydrolysate with sodium carbonate or sodium hydroxide and removal of the solid non-hydrolysed material. The hydrolysis temperature is normally in the range from 100 to 120°C and the reaction time from 2 to 24 hours. The degree of hydrolysis normally is between 60 and 85% of the amide groups. In the case of pure proteins higher degrees of hydrolysis can be obtained. Suitable protein hydrolysate starting materials can be obtained from casein, soya bean protein, gluten and oil seed cake materials. The protein hydrolysis is carried out in a conventional way whilst stirring the mixture in a reactor which is inert to HCl at higher temperatures.

Studies have shown that protein hydrolysates prepared with hydrochloric acid contain a quantity of dichloropropanols (DCP's), such as especially 1,3-dichloropropane-2-ol and monochloropropanediols (MCP's) and the problem of their elimination or rather the prevention of their formation has arisen.

From CA **78** (1978) no. 28213f it is known that an increased yield of HVP in protein hydrolysis can be obtained by a two-stage hydrolysis. The first stage is executed at 80°C, the second stage is executed at 100°C. A third stage may be applied at 60°C for partly evaporating the water. No reference is given to the problem of chloropropanol formation.

According to GB-A-2 183 659 (Société Des Produits Nestlé SA) hydrochloric acid (HCl) hydrolysed protein is first freed from the insolubles and then subjected to steam distillation under reduced pressure while keeping the density of the hydrolysate at a substantially constant level in order to eliminate 1,3-dichloropropane-2-ol present.

Whilst the elimination of 1,3-dichloropropane-2-ol from HCl-hydrolysed protein improves the properties of these food supplements and flavours considerably there has been a need for methods which reduce formation and/or remove dichloropropanols (DCP's) and monochloropropane-diols (MCP's) more efficiently.

The present invention provides a process for hydrolysing protein in which the hydrolysis reaction is initially carried out at a temperature between 60 and 97°C, preferably between 60 and 95°C, and wherein the reaction temperature is increased to 100-110°C over a reaction period of between 224 hours and that the mixture is subsequently kept at this higher temperature for a period of 15 minutes to 2 hours followed by cooling, neutralizing and filtering. Preferably the hydrolysis is so conducted that 15 - 45% of the total reaction time is spent at the final temperature.

The hydrolysis is carried out in such a way that the temperature is either gradually and continuously increased at a rate of 0.01-0.3°C/minute or stepwise increased. In the latter case the temperature is preferably increased in many small steps and at a slow gradient. It is not necessary to keep the temperature constant between the various steps, but often this temperature is kept roughly constant. In the stepwise process it is recommendable to increase the temperature at the smallest possible steps practically achievable and not to exceed 5°C.

In order to obtain a product in which the amounts of dichloropropanols is further reduced the hydrolysis reaction as described above can be followed by a steam distillation step. Preferably the steam distillation step is so conducted that the amount of water decreases or is kept substantially constant.

Alternatively, instead of or in addition to the distillation step a gel permeation step may be included in the process so as to further reduce the monochloropropanediol and dichloropropanol content

In an another embodiment of the invention the hydrolysis of the protein is carried out as described above and the subsequently neutralization is carried out to a pH between 5.5 and 8.0, whereafter hydrolysis of any monochloropropanediols and dichloropropanols is conducted at a temperature between 20 and 180°C for a period between 10 days to 5 minutes. This may result directly in a product free from detectable amounts of monochloropropanediols and dichloropropanols, but sometimes an additional steam distillation step is useful for this purpose.

The improved hydrolysate obtained according to the process of the present invention can be used with advantage as a savoury flavour, in foodstuffs, such as soups, beefburgers, sauces, sausages, goulash etc.

The improved hydrolysates obtained according to the process of the present invention are also an excellent starting materials for the preparation of reaction flavours in which the hydrolysate is reacted with monoand di-saccharides, cysteine/cystine, thiamine etc in which reaction flavour a major part of the starting amino acids remain unchanged.

The detection method for the monochloropropanols and dichloropropanols used in the examples of the present specification is a modification of the method described on page 5 of GB-A- 2 183 659 (Soc. Prod. Nestlé), which method has been extended by improved extraction techniques as to permit also MCP determination.

The invention is illustrated by the following examples:

Example I-IV

125 g of maize protein, 125 g of water and 130 g aqueous hydrochloric acid (s.g. 1.18) were charged to a 1000 ml. round bottomed flask which was equipped with a stirrer, thermometer, condenser and a platinum resistance thermometer. Heating of the flask was achieved by the use of an external heating mantle. Both the platinum resistance thermometer and the heating mantle were connected via an interface to a microcomputer. By the use of the appropriate software, the required temperature profile as evident from the table below could be achieved for the reaction. The reaction was left under computer control until the end time had been achieved. At this point the reaction mixture was rapidly cooled to room temperature. Subsequently the pH of the sample was adjusted to pH 5.6 by adding some concentrated aqueous sodium hydroxide (48%), subsequently 1% of food grade charcoal were added, the mixture was then stirred for 10 minutes and filtered through a No.4 Whatman filter paper.

The various samples were then analyzed by the extended method of GB-A- 2 183 659. The degree of hydrolysis was determined as the concentration of free alpha amino groups as a percentage of the total nitrogen. concentration.

The results are tabulated below:

| Initial Temp. °C | Final Temp. °C | Ramp Time mins | Total time mins | Hydrolysis % | MCP ppm | DCP ppm |
|---|---|---|---|---|---|---|
| 96 | 102 | 240 | 360 | 71 | <10 | <0.05 |
| 96 | 102 | 240 | 360 | 71 | <10 | <0.05 |
| 84 | 102 | 240 | 360 | 68 | <10 | <0.05 |
| 84 | 102 | 240 | 360 | 66 | <10 | <0.05 |

MCP levels were further reduced to values below 1 ppm

(detection level) by subsequently increasing the pH to a value of 7.5 and heating to a temperature of 100°C and maintaining at that temperature for one hour.

**Claims**

1. A process for preparing an improved HCl-hydrolysed protein characterized in that the hydrolysis reaction is initially carried out at a temperature between 60 and 97°C and that the reaction temperature is increased, either gradually at a rate of 0.01-0.3°C/minute or stepwise, to a temperature between 100-110°C over a reaction period of between 2-24 hours and that the mixture is kept at the higher temperature for a period of 15 minutes to 2 hours followed by cooling, neutralizing and filtering.

2. A process according to claim 1 characterized in that the stepwise temperature increase is so conducted that the steps are as small as practically possible and less than 5°C.

3. A process according to claim 1 or 2, characterized in that the hydrolysis reaction is followed by a steam distillation step.

4. A process according to claim 3 characterized in that the steam distillation is carried out at substantially constant amount of water in the hydrolysate.

5. A process according to any preceding claim characterized in that a gel permeation step is included.

6. A process according to any of the preceding claims where 15-45% of the total reaction time is spent at the final temperature.

7. A process according to any of the preceding claims characterized in that neutralization is carried out to

EP 0 361 596 B1

a pH between 5.5 and 8.0 and that hydrolysis of monochloropropanediols and any dichloropropanols is conducted at a temperature between 20 and 180°C for a period between 10 days to 5 minutes.

**Patentansprüche**

1. Verfahren zur Herstellung eines verbesser ten HCl-hydrolysierten Proteins, dadurch gekennzeichnet, daß die Hydrolysereaktion anfänglich bei einer Temperatur zwischen 60 und 97°C durchgeführt wird und daß die Reaktions temperatur entweder allmählich mit einer Geschwindigkeit von 0,01 bis 0,3 °C/min oder schrittweise über eine Reaktionsdauer zwischen 2 bis 24 h auf eine Temperatur zwischen 100 bis 110°C erhöht wird und daß die Mischung für eine Dauer von 15 min bis 2 h bei der höheren Temperatur gehalten wird, worauf das Abkühlen, Neutralisieren und Filtrieren folgt.

2. Verfahren gemäß Anspruch 1, dadurch gekennzeichnet, daß die schrittweise Temperaturerhöhung so durchgeführt wird, daß die Schritte so klein wie praktisch möglich sind und weniger als 5°C betragen.

3. Verfahren gemäß Anspruch 1 oder 2, dadurch gekennzeichnet, daß auf die Hydrolysereaktion ein Wasserdampfdestillationsschritt folgt.

4. Verfahren gemäß Anspruch 3, dadurch gekennzeichnet, daß die Wasserdampfdestillation bei einer im wesentlichen konstanten Wassermenge im Hydrolysat durchgeführt wird.

5. Verfahren gemäß irgendeinem vorhergehenden Anspruch, dadurch gekennzeichnet, daß ein Gelpermeationsschritt einbezogen wird.

6. Verfahren gemäß irgendeinem der vorhergehenden Ansprüche, bei dem 15 bis 45 % der gesamten Reaktionszeit bei der Endtemperatur verbracht werden.

7. Verfahren gemäß irgendeinem der vorhergehenden Ansprüche, dadurch gekennzeichnet, daß die Neutralisation auf einen pH-Wert zwischen 5,5 und 8,0 durchgeführt wird und daß die Hydrolyse von Monochlorpropandiolen und irgendwelchen Dichlorpropanolen bei einer Temperatur zwischen 20 und 180°C für eine Dauer zwischen 10 Tagen bis 5 min erfolgt.

**Revendications**

1. Un procédé pour préparer une protéine améliorée, hydrolysée par HCl, caractérisé en ce que la réaction d'hydrolyse est initialement mise en oeuvre à une température entre 60 et 97°C et que la température de réaction est accrue, soit progressivement selon une vitesse de 0,01 à 0,3°C par minute, soit par paliers, jusqu'à une température entre 100 et 110°C pendant une période de réaction entre 2 et 24 heures, et que le mélange est conservé à cette température très élevée pendant une période de 15 minutes à 2 heures, suivi par un refroidissement, une neutralisation et une filtration.

2. Un procédé selon la revendication 1, caractérisé en ce que l'accroissement de température par paliers est réalisé de façon que les paliers soient aussi petits que cela est possible en pratique et inférieurs à 5°C.

3. Un procédé selon la revendication 1 ou 2, caractérisé en ce que la réaction d'hydrolyse est suivie par une étape de distillation à la vapeur.

4. Un procédé selon la revendication 3, caractérisé en ce que la distillation à la vapeur est réalisée selon une quantité pratiquement constante d'eau dans l'hydrolysat.

5. Un procédé selon l'une quelconque des revendications précédentes, caractérisé en ce qu'une étape de perméation par gel est incorporée.

6. Un procédé selon l'une quelconque des revendications précédentes, dans lequel 15 à 45 % du temps de réaction total se déroule à la température finale.

7. Un procédé selon l'une quelconque des revendications précédentes, caractérisé en ce que la neutralisation est mise en oeuvre à un pH entre 5,5 et 8,0 et que l'hydrolyse des monochloropropanediols et d'un dichloropropanol est réalisée à une température entre 20 et 180°C pendant une période entre 10 jours et 5 minutes.

4